# EUROPEAN PATENT SPECIFICATION

(11) **EP 1 592 305 B1**
(45) Date of publication and mention of the grant of the patent: **02.11.2006**
(21) Application number: 04707881.1
(22) Date of filing: 04.02.2004
(51) Int. Cl.: A22C 15/00, A22B 7/00

(54) **AN ARRANGEMENT AND A METHOD OF LIFTING OFF PIECES OF MEAT FROM A TRANSPORT DEVICE WITH HOOKS**
ANORDNUNG UND VERFAHREN ZUM ABHEBEN VON FLEISCHSTÜCKEN VON EINER TRANSPORTVORRICHTUNG MIT HAKEN
SYSTEME ET PROCEDE POUR DECROCHER DES PIECES DE VIANDE D'UN DISPOSITIF DE TRANSPORT A CROCHETS

(30) Priority: 04.02.2003 DK 200300153
(43) Date of publication of application: 09.11.2005
(73) Proprietor: Slagteriernes Forskningsinstitut, 4000 Roskilde (DK)
(72) Inventor: IVERSEN, Thomas, Peter, DK-2630 Taastrup (DK)
(74) Representative: Larsen, Hans Ole
(86) International application number: PCT/DK2004/000080
(87) International publication number: WO 2004/068952

(56) References cited:
- FR-A- 2 720 232

## Description

The invention relates to an arrangement for the lifting off of pieces of meat from a transport device with hooks mounted on a vertically suspended rod, said arrangement comprising a surface with inclined sides and a part having a recess to receive the hooks by a vertical movement of the rod toward the surface.

The invention moreover relates to a method of lifting off pieces of meat which are secured to hooks at several levels on a transport device.

Transport devices with hooks on a vertically suspended rod (the so-called Christmas trees) are used in connection with the transport of pieces of meat to be processed after e.g. a stay in a chill room. Such pieces of meat may be cuts, such as hind leg cuts, fore-end cuts or middle cuts, which may be cut into loin cuts and streaky belly cuts.

The transport of the pieces of meat takes place by suspension of the pieces of meat from hooks mounted on vertical rods which are suspended at their one end from a slide rod by means of an upper hook.

Many hooks may be mounted on a rod, and since each hook carries several kilos, it is clear that it is a heavy work to manipulate transport devices with suspended pieces of meat.

With a view to facilitating the lifting off of pieces of meat suspended from the transport devices, FR 2 720 232 discloses an arrangement of the type stated in the introductory portion of claim 1, where pieces of meat suspended from hooks on rods are conveyed to a conical part having at the top a recess through which the hooks on the rods may pass. This known arrangement requires that a slaughterhouse worker manipulates the rod to the recess by lifting the lowermost pieces of meat such that he can see the lowermost hook and places it opposite the recess. When the positioning of the hook has been completed, the rod is lowered into the conical part, the intention being that the pieces of meat are to be released and slide down the conical part to a table.

In addition to requiring some heavy working operations there is a limit to how easy the loosening of the pieces of meat can be performed, since the pieces of meat to be released must be removed before the next pieces of meat may be loosened and allowed to slide down the conical part to the table.

Accordingly, an object of the invention is to provide an arrangement of the type defined in the introductory portion of claim 1, in which the lifting off of the pieces of meat is facilitated.

The object of the invention is achieved by an arrangement of the type defined in the opening paragraph, which is characterized in that the surface is formed with two sections, where the first section is adapted to separate the pieces of meat, which are secured to the hooks at the lowermost level of the transport device, into two groups by a horizontal movement of the rod, and where the second section is adapted to release the pieces of meat from the hooks by a vertical movement of the rod in the recess.

Hereby, during the horizontal movement, the transport devices will remain centered with the pieces of meat on the lowermost hooks divided into two groups which have contact with their separate surface parts until they reach the second section, where the loosening of the pieces of meat takes place through the vertical movement. Many heavy working operations may be avoided hereby.

To additionally ensure that the pieces of meat are separated into two groups, it is an advantage if, as stated in claim 2, the first section is configured as a symmetrically shaped guide face with inclined sides which have a lower level at the end most remove from the second section than the end at the second section. Hereby, the lowermost pieces of meat will automatically be divided into two groups by a movement toward the second section.

It is an advantage if, as stated in claim 3, the second section is formed with two inclined surfaces, thereby making it possible in practice to arrange a conveyor belt on each side of the second section, as stated in claim 11, which ensures that the pieces of meat may be transported to a suitable processing location without the cooperation of the slaughterhouse worker.

With a view to eliminating the possibility that the pieces of meat get jammed in the recess, it is an advantage if, as stated in claim 4, a cover plate is arranged in the second section above the recess, said cover plate being displaceable longitudinally of said section, and if, as stated in claim 5, a switch near the second section is adapted to activate an actuator to move the displaceable cover plate.

To additionally ensure that the separation of the pieces of meat into two groups takes place without operational interruptions, it is expedient if, as stated in claim 6, a longitudinal guide for the free end of the rod is provided on the two inclined surfaces, said guide extending from the transition between the first section and the second section to the recess.

This effect may be enhanced additionally if, as stated in claim 7, the guide is configured as a channel which narrows in the direction from the transition to the recess, and/or, as stated in claim 8, a bead is provided on the two inclined faces in the vicinity of the first section, it being ensured hereby that the lower end of the rod hits the channel, and that the separation into the two groups is ensured even if the rod tilts slightly to and fro.

With a view to optimum hygiene, it is an advantage if, as stated in claim 9, the bead is configured as a plate member such that a hole is provided, defined by the plate member, the inclined surfaces and the transition between the first section and the second section, thereby allowing effective cleaning, e.g. by flushing, without small pieces of meat getting jammed.

It is moreover expedient if, as stated in claim 10, the recess is configured with a geometry corresponding to the geometry of the hooks seen in a horizontal cross-sectional plane, and, as stated in claim 11, that a conveyor belt is arranged on each side of the second section.

Alternatively, as stated in claim 12, a round plate/round table may be arranged below the second section, with receiving faces on each side of the section so that pieces of meat may be received synchronously on each side.

To ensure that the pieces of meat are oriented correctly on the round plate/round table, it is moreover an advantage if, as stated in claim 13, a circular guide edge/face is arranged near the centre of the round plate.

When, as stated in claim 14, a circular guide edge/face interrupted by an opening over a segment of an arc is arranged near the outer edge of the round plate, the pieces of meat may be guided away from the round plate during the circular movement and further on by a conveyor arranged at the opening to receive the pieces of meat, as stated in claim 15.

With a view to adapting the arrangement to handle different types of pieces of meat, it is an advantage if, as stated in claim 16, the rotation of the round plate is controllable.

It is moreover expedient if, as stated in claim 17, the vertically suspended rod, in the position in which it is placed above the recesses, is suspended from a gripper device in a height-displaceable tower, and if, as stated in claim 18, the height displacement is performed in steps by a step motor, whereby the loosening of the pieces of meat may be performed in that each "step" corresponds to the distance between the vertical hooks.

When, as stated in claim 19, the suspension from the height-displaceable tower is connected with or comprises a weighing cell, it is easy to record when the last pieces of meat are loosened, which means that raising and removal of the vertical rod may be initiated.

Additionally, when, as stated in claim 20, the horizontal movement of the rod is provided by a horizontally displaceable pushing mechanism, and, as stated in claim 21, the horizontally displaceable pushing mechanism is formed by at least two carriers arranged on a vertical stay which is horizontally displaceable, a steady movement of the vertical rod toward and on to the second section is achieved.

When, as stated in claim 22, the stay has arranged thereon two slide pipes which extend perpendicularly relative to the stay and with which the carriers are pivotally connected, they may be pivoted in before the next vertical rod with pieces of meat reaches the carriers, and when the rod has passed, the carriers are pivoted out again and push the pieces of meat on the vertical rod steadily toward the second section.

Finally, it is advantageous if, as stated in claim 23, the stay is suspended at its upper end from a horizontally extending slide pipe.

As mentioned, the invention is also relates to a method. As stated in claim 24, this method comprises the following steps:
a. separating the pieces of meat secured to the hooks at the lowermost level of the transport device into two groups during a horizontal movement of the transport device over a surface with in claimed sides,
b. moving the transport device vertically through a recess in said surface to receive the hooks to release the pieces of meat from the hooks at the lowermost level and to provide two groups of pieces of meat,
c. removing the released pieces of meat,
d. moving the transport device additionally vertically to release the pieces of meat at the overlying level of the hooks and removing the released pieces of meat,
e. repeating step d, until the pieces of meat at all levels are released from the hooks and removed.

Expedient embodiments of the method are defined in claims 25 - 27.

The invention will now be explained more fully with reference to the drawing, in which
- fig. 1: schematically shows an arrangement according to the invention,
- fig. 2: shows the arrangement of fig. 1 seen from the right,
- fig. 3: shows an enlarged view of a part of the arrangement of figs. 1 and 2, while
- fig. 4: shows a part of the arrangement of figs. 1 - 3 with suspended pieces of meat,
- fig. 5: shows a lateral view of a part of a second embodiment of the arrangement in a first working operation,
- fig. 6: shows a part of the second embodiment of the arrangement in a second working operation,
- fig. 7: shows the second embodiment of the arrangement with pieces of meat which are being loosened,
- fig. 8: shows details of the second embodiment of the arrangement,
- fig. 9: shows a height-displaceable tower for use in the arrangements according to the invention, while
- fig. 10: shows a weighing device for use in the height-displaceable tower in fig. 9.

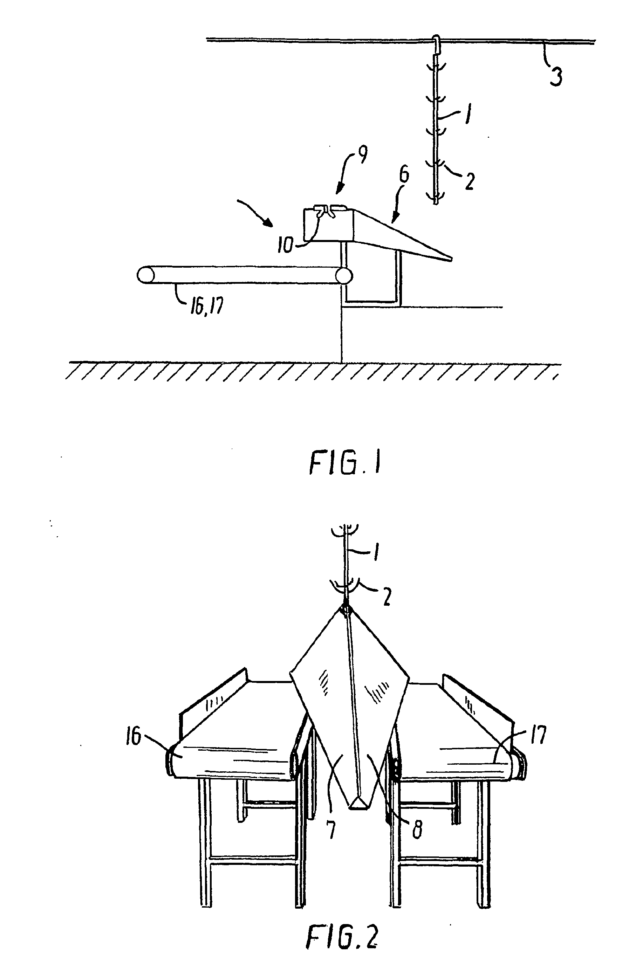

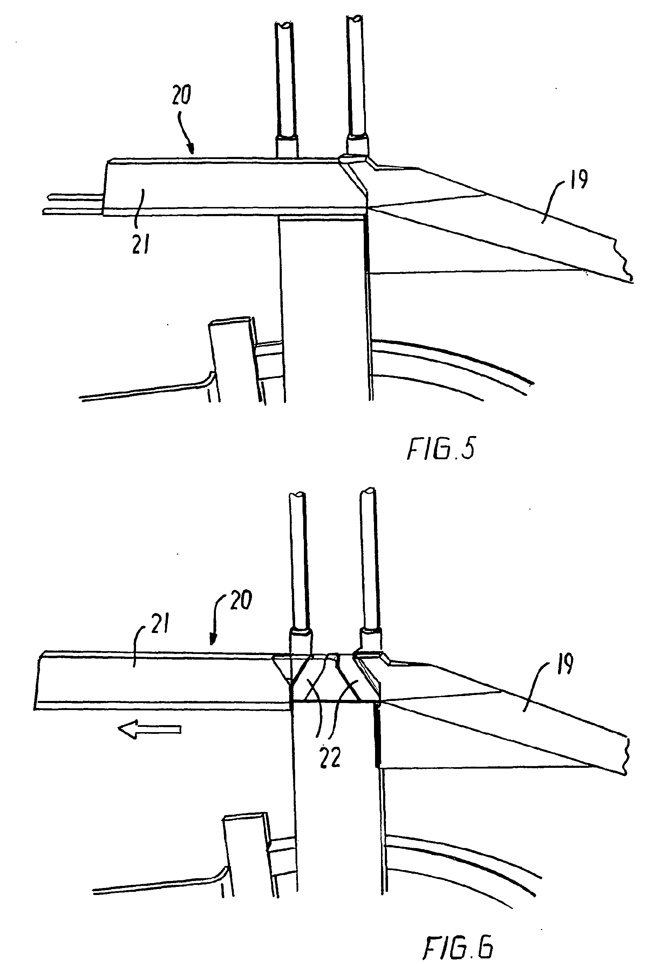

Fig. 1 shows a transport device with a rod 1 having mounted thereon a plurality of hooks 2 which carry pieces of meat, which are not shown in figs. 1 - 3, but are shown in fig. 4 at the pieces of meat 4 and 5. The rod 1 is suspended from a transport rail which is shown schematically and designated 3 in fig. 1.

When a transport device with pieces of meat has been transported from a chill room at the slaughterhouse for lifting off and further processing of the pieces of meat, the device is moved to the arrangement which, as will be seen in the figures, consists of a first section 6 and a second section 9. The first section 6 is shaped as a guide face with inclined sides which are designated 7 and 8. As will be seen, the inclined sides extend from the first section 6 downwards and terminate in a tip. The second section 9 is formed with two inclined surfaces which are designated 11 and 12, respectively.

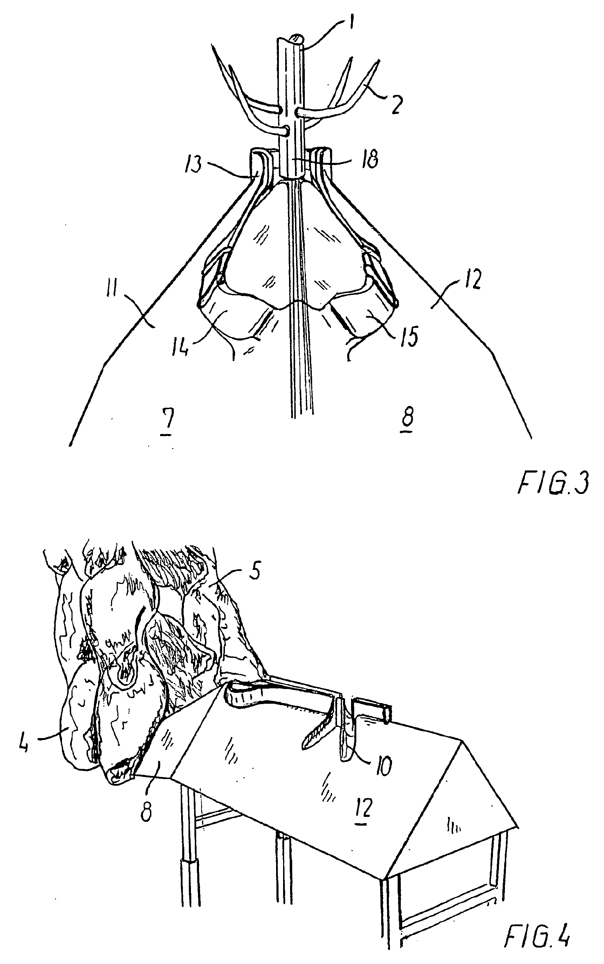

As will be seen best in fig. 3, the second section 9 is provided partly with a recess 10 and partly with a longitudinal channel 13, which is formed between two lateral guides and which narrows in the direction toward the recess. The recess 10 is geometrically shaped as a cross in the two inclined surfaces 11 and 12. This cross has dimensions which allow the hooks 2 to pass through the recess.

Finally, it is seen best in fig. 3 that two beads designated 14 and 15 are provided in the transition between the first 6 and the second 9 sections.

As will be seen in fig. 2, a conveyor belt designated 16 and 17, respectively, is arranged on both sides of the arrangement. Other transport means may also be used, e.g. a round plate with a rotating table.

The function of the arrangement of the invention will now be explained more fully.

It being assumed that pieces of meat are suspended from the hooks 2, as shown in fig. 4, and that the pieces of meat are to be loosened from the hooks for further processing, the transport device 1 is moved in a horizontal movement to the left in fig. 1.

At a time, the four pieces of meat suspended from the lowermost level of hooks hit the guide faces 7 and 8 of the first section 6.

In the further transport (which may be performed in that an operator pushes one or more of the suspended pieces of meat, or by means of a pushing mechanism) the pieces of meat will be divided into two groups, each having two pieces of meat, so that the pieces of meat of the one group slide on the one guide face 7, while the pieces of meat of the other group slide on the other guide face 8.

When the lowermost part 18 of the rod 1 reaches the second section 9, it will enter the channel 13 and be guided toward the recess 10.

The beads 14, 15 will ensure that the two groups of pieces of meat are additionally separated from each other so that the rod may slide unobstructedly into the channel.

When the transport device reaches the recess 10 and the lower end of the rod is stopped at this by means of a stop block arranged in the channel, it is lowered by means of an elevator arrangement, whereby the hooks are pulled off the pieces of meat which slide down the inclined surfaces 11 and 12 to the conveyor belts 16, 18, by means of which the pieces of meat may be conveyed further for boning/processing.

The transport device is pulled out of the recess again and is moved further on by the slide rod (after optional removal of the stop block) for washing and use again.

Figs. 5 and 6 show another embodiment of the first section 19 and second section 20 of the arrangement.

In this embodiment, the second section is provided with a slidable cover designated 21. This cover is intended to cover the recess 22 when pieces of meat (not shown) are conveyed from the first section 19 toward the second section 20. When the transport device with hooks is close to the recess 22, the cover 21 will be displaced so that the recess 22 is opened.

This function of the cover ensures that the lowermost pieces of meat on the transport device with hooks do not get jammed in the recess when they are moved from the first section to the second section.

It is additionally noted that no beads are provided in the embodiment of figs. 5 and 6.

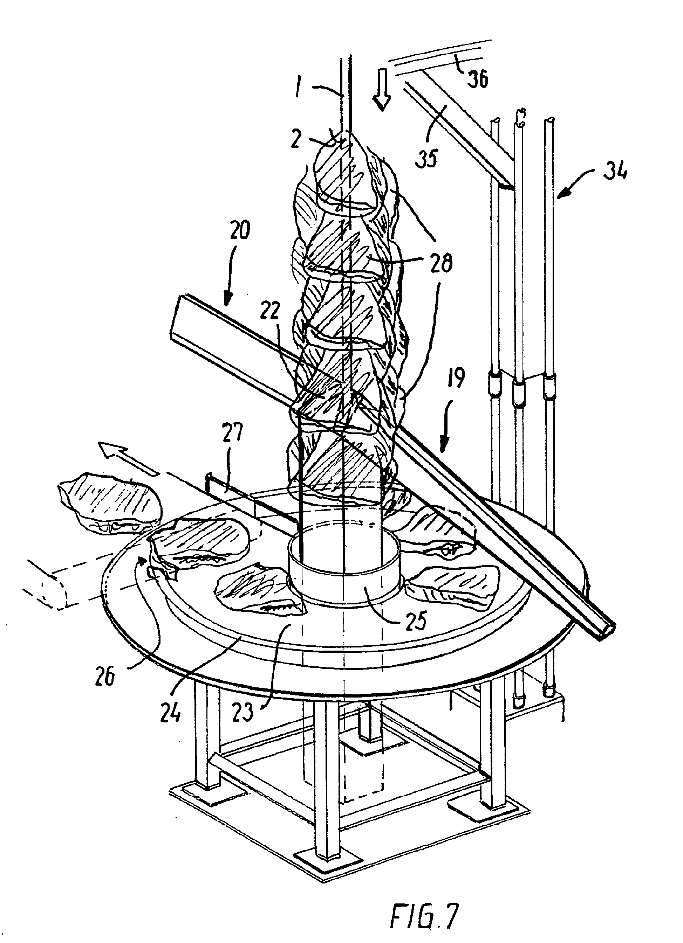

With reference now to fig. 7 it will be seen how pieces of meat 28 are about to be loosened in the same manner as was explained previously in connection with figs. 1-4.

The pieces of meat drop from the second section 20 down on each side of a round plate 23 which has receiving faces on each side of the second section. As will be seen, the round plate has an outer edge with a circular guide face 24 interrupted by an opening 26. A circular guide face 25 is provided near the centre of the round plate. Fig. 7 moreover shows a guide plate 27 which extends inwards over the round plate at one boundary of the opening.

The function of the arrangement shown in fig. 7 is as follows:

When the vertically suspended rod of the transport device with hooks is moved down through the recess in the second section, as explained before, the pieces of meat in pairs on each side of the round plate drop down on its surface.

Before the pieces of meat hit the surface, they hit the circular guide face 25 which causes them to be oriented in a desired manner. The pieces of meat circulate from there toward the opening 26 and hit the guide face 27, whereby the pieces of meat leave the round plate and are transferred e.g. to another conveyor.

Suitable selection of the speed of rotation of the round plate may ensure that the pieces of meat do not hit each other, since a piece of meat which is about to be loosened will hit the surface of the round plate and be positioned in direct extension of a previously loosened piece of meat.

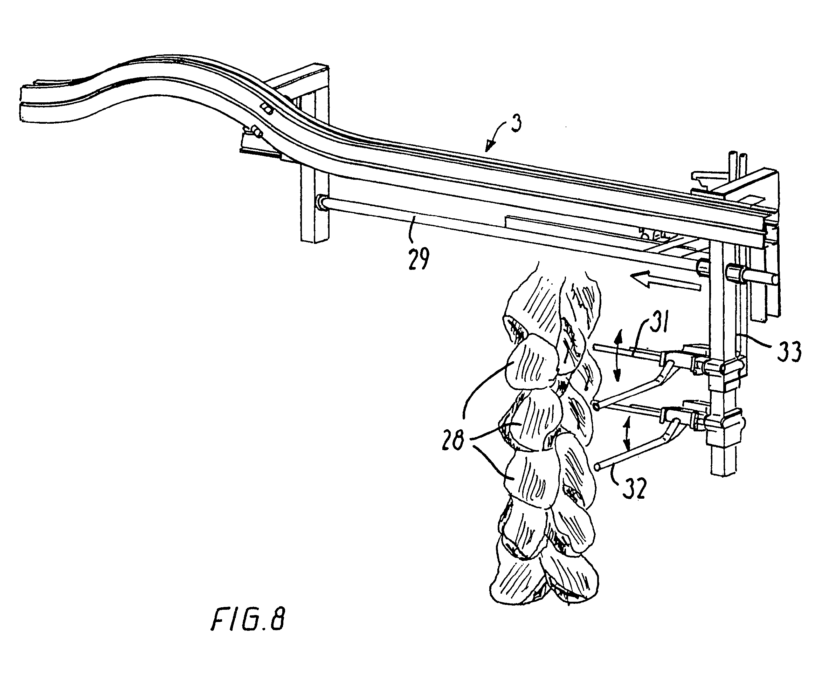

Fig. 8 shows the pieces of meat 28, which are suspended from the transport device with hooks, in a position in which the pieces of meat 28 by a horizontal movement are on their way toward the first section 19 (not shown) and the second section 20. This horizontal movement is performed by a pushing mechanism, which, as will be seen, is formed by a horizontally displaceable stay 33 on which a pipe 31 having two carriers 32 is mounted. The carriers 32 may be pivoted about the pipe 31, while the movement of the stay may be provided by the sliding thereof on a pipe 29. As will be seen in the figure, the two carriers are positioned horizontally, whereby they can push the transport device with pieces of meat.

When it reaches the recess in the second section, the two carriers are pivoted from a horizontal position to a vertical position, and then the stay is returned to another transport device with pieces of meat, and when the stay has reached a position behind this transport device, the carriers are returned to the horizontal position, and the entire pushing process is repeated.

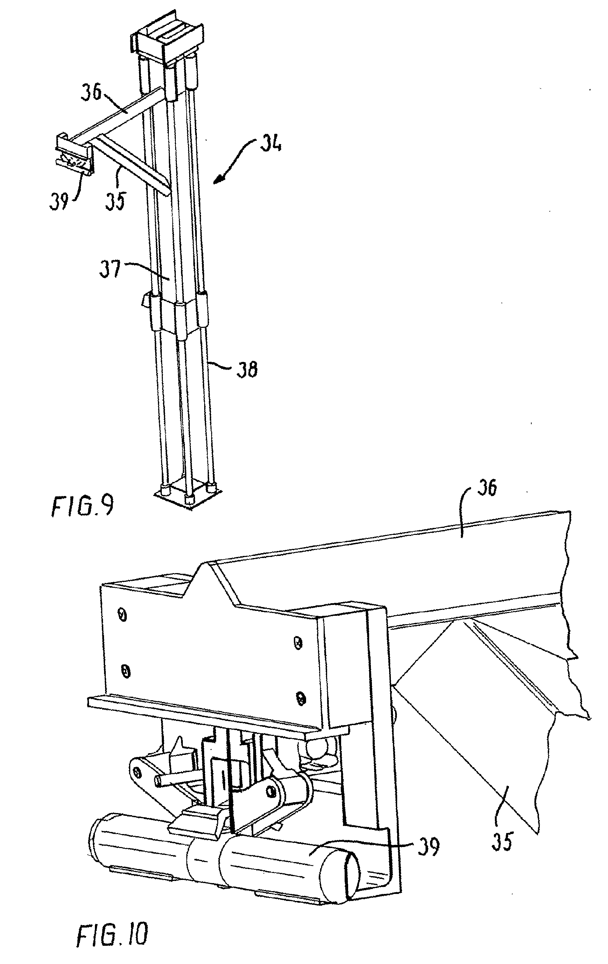

With reference now to figures 9 and 10 it will be explained how the vertical movement of the transport device with hooks through the recess is provided.

When the transport device has completed the horizontal movement, it is moved on to a height-displaceable tower 34 which, as will be seen, consists of a central part 37 which is slidably suspended from four pipes 38. On the central part, a gripper device 39 connected with a weighing cell is secured on a rod arrangement 35, 36.

The height-displaceable tower operates as follows:

When a transport device with hooks, from which pieces of meat are suspended, is moved inwards toward the gripper device, a weight of a certain size is recorded. As the pieces of meat are loosened from the height-displaceable tower by the vertical movement thereof, the weight being recorded is reduced. As soon as the weight has been recorded to be the weight of the transport device with hooks and without pieces of meat, the height-displaceable tower will pull the transport device with hooks out of the recess of the second section and move it further on after cleaning to receive other pieces of meat.

The invention thus provides a fully or partly automated arrangement where pieces of meat are lifted off the hooks of a transport device without or with a considerably smaller application of force on the part of operators.

## Claims

1. An arrangement for the lifting off of pieces of meat (4, 5) from a transport device with hooks (2) mounted on a vertically suspended rod (1), said arrangement comprising a surface with inclined sides and a part having a recess (10) to receive the hooks (2) by a vertical movement of the rod toward the surface, **characterized in that** the surface is formed with two sections (6, 9), where the first section (6) is adapted to separate the pieces of meat, which are secured to the hooks (2) at the lowermost level of the transport device, into two groups by a horizontal movement of the rod, and where the second section (10) is adapted to release the pieces of meat (4, 5) from the hooks (2) by a vertical movement of the rod in the recess (10).

2. An arrangement according to claim 1, **characterized in that** the first section (6) is configured as a symmetrically shaped guide face with inclined sides (7, 8) which have a lower level at the end most remote from the second section (9) than the end at the second section.

3. An arrangement according to claim 1 or 2, **characterized in that** the second section (9) is formed with two inclined surfaces (11, 12).

4. An arrangement according to claims 1 - 3, **characterized in that** a cover plate is arranged in the second section above the recess, said cover plate being displaceable longitudinally of said section.

5. An arrangement according to claim 4, **characterized in that** a switch near the second section is adapted to activate an actuator to move the displaceable cover plate.

6. An arrangement according to claim 3, **characterized in that** a longitudinal guide for the free end of the rod (1) is provided on the two inclined surfaces (11, 12), said guide extending from the transition between the first section and the second section to the recess.

7. An arrangement according to claim 6, **characterized in that** the guide is configured as a channel (13) which narrows in the direction from the transition to the recess.

8. An arrangement according to claim 3, **characterized in that** a bead (14) is provided on the two inclined surfaces (11, 12) in the vicinity of the first section (6).

9. An arrangement according to claim 8, **characterized in that** the bead (14) is configured as a plate member so that a hole is provided, defined by the plate member, the inclined surfaces and the transition between the first section and the second section.

10. An arrangement according to claims 1 - 9, **characterized in that** the recess (10) is configured with a geometry corresponding to the geometry of the hooks (2) seen in a horizontal cross-sectional plane.

11. An arrangement according to claims 1 - 10, **characterized in that** a conveyor belt (16, 17) is provided on each side of the second section.

12. An arrangement according to claims 1 - 11, **characterized in that** a round plate/round table is arranged below the second section, with receiving faces on each side of the section.

13. An arrangement according to claim 12, **characterized in that** a circular guide edge/face is arranged near the centre of the round plate.

14. An arrangement according to claims 12 - 13, **characterized in that** a circular guide edge/face interrupted by an opening over a segment of an arc is arranged near the outer edge of the round plate.

15. An arrangement according to claim 14, **characterized in that** a conveyor is arranged at the opening to receive pieces of meat from the round plate.

16. An arrangement according to claims 12 - 15, **characterized in that** the rotation of the round plate is controllable.

17. An arrangement according to claims 1 - 16, **characterized in that** the vertically suspended rod, in the position in which it is placed above the recesses, is suspended from a gripper device in a height-displaceable tower.

18. An arrangement according to claim 17, **characterized in that** the height displacement is performed in steps by a step motor.

19. An arrangement according to claim 17 or 18, **characterized in that** the suspension in the height-displaceable tower is connected with or comprises a weighing cell.

20. An arrangement according to claims 1 - 19, **characterized in that** the horizontal movement of the rod is provided by a horizontally displaceable pushing mechanism.

21. An arrangement according to claim 20, **characterized in that** the horizontally displaceable pushing mechanism is formed by at least two carriers arranged on a vertical stay which is horizontally displaceable.

22. An arrangement according to claim 21, **characterized in that** the stay has arranged thereon two slide pipes which extend perpendicularly to the stay and with which the carriers are pivotally connected.

23. An arrangement according to claim 21 or 22, **characterized in that** the stay is suspended at its upper end from a horizontally extending slide pipe.

24. A method of lifting off pieces of meat which are secured to hooks at several levels on a transport device, comprising the following steps:
a. separating the pieces of meat secured to the hooks at the lowermost level of the transport device into two groups during a horizontal movement of the transport device over a surface with inclined sides,
b. moving the transport device vertically through a recess in said surface to receive the hooks to release the pieces of meat from the hooks at the lowermost level and to provide two groups of pieces of meat,
c. removing the released pieces of meat,
d. moving the transport device further vertically to release the pieces of meat at the overlying level of the hooks and removing the released pieces of meat,
e. repeating step d until the pieces of meat at all levels are released from the hooks and removed.

25. A method according to claim 24, **characterized by** moving the released pieces of meat down on a round plate, which has an edge with an opening through which the released pieces are transferred to a conveyor.

26. A method according to claim 24 or 25, **characterized by** performing the vertical movement of the transport device in steps, and, each time pieces of meat are removed, performing a weighing of the transport device with the remaining pieces of meat.

27. A method according to claim 26, **characterized by** moving the transport device with hooks out of the recess in the surface when the performed weighing gives a weight value which corresponds to that of the transport device without pieces of meat.

## Patentansprüche

1. Anordnung zum Abheben von Fleischstücken (4, 5) von einer Transporteinrichtung mit an einer vertikal aufgehängten Stange (1) angebrachten Haken (2), wobei die Anordnung eine Oberfläche mit geneigten Seiten und ein Teil mit einer Ausnehmung (10) umfasst, um die Haken (2) durch eine vertikale Bewegung der Stange auf die Oberfläche hin aufzunehmen, **dadurch gekennzeichnet, dass** die Oberfläche mit zwei Abschnitten (6, 9) gebildet ist, wobei der erste Abschnitt (6) eingerichtet ist, um die Fleischstücke, die auf dem untersten Niveau der Transporteinrichtung an den Haken (2) befestigt sind, durch eine horizontale Bewegung der Stange in zwei Gruppen zu trennen, und wobei der zweite Abschnitt (10) eingerichtet ist, um die Fleischstücke (4, 5) durch eine vertikale Bewegung der Stange in der Ausnehmung (10) von den Haken (2) freizugeben.

2. Anordnung nach Anspruch 1, **dadurch gekennzeichnet, dass** der erste Abschnitt (6) als symmetrisch geformte Führungsfläche mit geneigten Seiten (7, 8) konfiguriert ist, die an dem Ende, das von dem zweiten Abschnitt (9) am weitesten entfernt ist, ein niedrigeres Niveau als das Ende an dem zweiten Abschnitt aufweisen.

3. Anordnung nach Anspruch 1 oder 2, **dadurch gekennzeichnet, dass** der zweite Abschnitt (9) mit zwei geneigten Oberflächen (11, 12) gebildet ist.

4. Anordnung nach den Ansprüchen 1-3, **dadurch gekennzeichnet, dass** in dem zweiten Abschnitt über der Ausnehmung eine Abdeckplatte angeordnet ist, wobei die Abdeckplatte der Länge nach zu dem Abschnitt verschiebbar ist.

5. Anordnung nach Anspruch 4, **dadurch gekennzeichnet, dass** ein Schalter nahe dem zweiten Abschnitt eingerichtet ist, um einen Antrieb zu aktivieren, um die verschiebbare Abdeckplatte zu bewegen.

6. Anordnung nach Anspruch 3, **dadurch gekennzeichnet, dass** an den beiden geneigten Oberflächen (11, 12) eine Längsführung für das freie Ende der Stange (1) vorgesehen ist, wobei sich die Führung von dem Übergang zwischen dem ersten Abschnitt und dem zweiten Abschnitt zu der Ausnehmung erstreckt.

7. Anordnung nach Anspruch 6, **dadurch gekennzeichnet, dass** die Führung als Kanal (13) konfiguriert ist, der sich in der Richtung von dem Übergang zu der Ausnehmung verengt.

8. Anordnung nach Anspruch 3, **dadurch gekennzeichnet, dass** an den beiden geneigten Oberflächen (11, 12) in der Nähe des ersten Abschnitts (6) ein Kragen (14) vorgesehen ist.

9. Anordnung nach Anspruch 8, **dadurch gekennzeichnet, dass** der Kragen (14) als Plattenelement konfiguriert ist, so dass ein Loch vorgesehen ist, das durch das Plattenelement, die geneigten Oberflächen und den Übergang zwischen dem ersten Abschnitt und dem zweiten Abschnitt definiert ist.

10. Anordnung nach Ansprüchen 1-9, **dadurch gekennzeichnet, dass** die Ausnehmung (10) mit einer Geometrie konfiguriert ist, die der Geometrie der Haken (2) in einer horizontalen Querschnittsebene gesehen entspricht.

11. Anordnung nach Ansprüchen 1-10, **dadurch gekennzeichnet, dass** an jeder Seite des zweiten Abschnitts ein Fördergurt (16, 17) vorgesehen ist.

12. Anordnung nach Ansprüchen 1-11, **dadurch gekennzeichnet, dass** unter dem zweiten Abschnitt eine runde Platte/ein runder Tisch angeordnet ist, wobei sich an jeder Seite des Abschnitts Aufnahmeflächen befinden.

13. Anordnung nach Anspruch 12, **dadurch gekennzeichnet, dass** nahe dem Mittelpunkt der runden Platte ein kreisförmiger Führungsrand/eine kreisförmige Führungsfläche angeordnet ist.

14. Anordnung nach Ansprüchen 12-13, **dadurch gekennzeichnet, dass** nahe dem äußeren Rand der runden Platte ein kreisförmiger Führungsrand/eine kreisförmige Führungsfläche angeordnet ist, der/die durch eine Öffnung über einem Segment eines Bogens unterbrochen ist.

15. Anordnung nach Anspruch 14, **dadurch gekennzeichnet, dass** an der Öffnung ein Förderer angeordnet ist, um Fleischstücke von der runden Platte zu empfangen.

16. Anordnung nach Ansprüchen 12-15, **dadurch gekennzeichnet, dass** die Rotation der runden Platte steuerbar ist.

17. Anordnung nach Ansprüchen 1-16, **dadurch gekennzeichnet, dass** die vertikal aufgehängte Stange in der Position, in der sie über den Ausnehmungen platziert ist, von einer Greifeinrichtung in einem höhenverschiebbaren Turm herabhängt.

18. Anordnung nach Anspruch 17, **dadurch gekennzeichnet, dass** die Höhenverschiebung in Schritten durch einen Schrittmotor durchgeführt wird.

19. Anordnung nach Anspruch 17 oder 18, **dadurch gekennzeichnet, dass** die Aufhängung in dem höhenverschiebbaren Turm mit einer Wiegezelle verbunden ist oder eine solche umfasst.

20. Anordnung nach Ansprüchen 1-19, **dadurch gekennzeichnet, dass** die horizontale Bewegung der Stange durch einen horizontal verschiebbaren Drückmechanismus vorgesehen ist.

21. Anordnung nach Anspruch 20, **dadurch gekennzeichnet, dass** der horizontal verschiebbare Drückmechanismus durch mindestens zwei Träger gebildet wird, die an einer vertikalen Strebe angeordnet sind, die horizontal verschiebbar ist.

22. Anordnung nach Anspruch 21, **dadurch gekennzeichnet, dass** die Strebe zwei daran angeordnete Gleitrohre aufweist, die sich senkrecht zu der Strebe erstrecken und mit denen die Träger schwenkbar verbunden sind.

23. Anordnung nach Anspruch 21 oder 22, **dadurch gekennzeichnet, dass** die Strebe an ihrem oberen Ende von einem sich horizontal erstreckenden Gleitrohr herabhängt.

24. Verfahren zum Abheben von Fleischstücken, die auf verschiedenen Niveaus einer Transporteinrichtung an Haken befestigt sind, umfassend folgende Schritte:
a. Trennen der an den Haken befestigten Fleischstücke auf dem niedrigsten Niveau der Transporteinrichtung in zwei Gruppen während einer horizontalen Bewegung der Transporteinrichtung über eine Oberfläche mit geneigten Seiten,
b. Bewegen der Transporteinrichtung vertikal durch eine Ausnehmung in der Oberfläche, um die Haken aufzunehmen, um die Fleischstücke auf dem niedrigsten Niveau von den Haken freizugeben und um zwei Gruppen von Fleischstücken bereitzustellen,
c. Entfernen der freigegebenen Fleischstücke,
d. weiteres vertikales Bewegen der Transporteinrichtung, um die Fleischstücke auf dem darüber liegenden Niveau der Haken freizugeben und die freigegebenen Fleischstücke zu entfernen,
e. Wiederholen von Schritt d, bis die Fleischstücke auf allen Niveaus von den Haken freigegeben und entfernt worden sind.

25. Verfahren nach Anspruch 24, **gekennzeichnet durch** Bewegen der freigegebenen Fleischstücke nach unten auf einer runden Platte, die einen Rand mit einer Öffnung aufweist, **durch** die die freigegebenen Stücke auf einen Förderer überführt werden.

26. Verfahren nach Anspruch 24 oder 25, **gekennzeichnet durch** Durchführen der vertikalen Bewegung der Transporteinrichtung in Schritten und Durchführen einer Wiegung der Transporteinrichtung mit den verbleibenden Fleischstücken jedes Mal, wenn Fleischstücke entfernt werden.

27. Verfahren nach Anspruch 26, **gekennzeichnet durch** Bewegen der Transporteinrichtung mit Haken aus der Ausnehmung in der Oberfläche, wenn die durchgeführte Wiegung einen Gewichtswert ergibt, der dem der Transporteinrichtung ohne Fleischstücke entspricht.

## Revendications

1. Système permettant de décrocher des pièces de viande (4, 5) d'un dispositif de transport muni de crochets (2) monté sur une tringle (1) suspendue verticalement, ledit système comprenant une surface ayant des côtés inclinés et une partie comprenant un renfoncement (10) conçu pour recevoir les crochets (2) par un mouvement vertical de la tringle en direction de la surface, **caractérisé en ce que** la surface est formée de deux sections (6, 9), où la première section (6) est conçue pour séparer les pièces de viande, qui sont fixées aux crochets (2) au niveau le plus bas du dispositif de transport, en deux groupes par un mouvement horizontal de la tringle, et où la seconde section (10) est conçue pour libérer les pièces de viande (4,5) des crochets (2) par un mouvement vertical de la tringle dans le renfoncement (10).

2. Système selon la revendication 1, **caractérisé en ce que** la première section (6) est configurée comme une face de guidage de forme symétrique avec des côtés inclinés (7, 8) qui ont un niveau plus bas à l'extrémité la plus éloignée de la seconde section (9) qu'à l'extrémité située au niveau de la seconde section.

3. Système selon la revendication 1 ou 2, **caractérisé en ce que** la seconde section (9) est formée de deux surfaces inclinées (11, 12).

4. Système selon les revendications 1-3, **caractérisé en ce qu'**une plaque de couverture est aménagée dans la seconde section au-dessus du renfoncement, ladite plaque de couverture pouvant se déplacer le long de ladite section.

5. Système selon la revendication 4, **caractérisé en ce qu'**un commutateur situé à proximité de la seconde section est conçu pour activer un actionneur permettant de déplacer la plaque de couverture déplaçable.

6. Système selon la revendication 3, **caractérisé en ce qu'**un guide longitudinal pour l'extrémité libre de la tringle (1) est aménagé sur les deux surfaces inclinées (11, 12), ledit guide s'étendant depuis la transition entre la première section et la seconde section jusqu'au renfoncement.

7. Système selon la revendication 6, **caractérisé en ce que** le guide est configuré sous la forme d'un canal (13) qui se rétrécit dans la direction de la transition vers le renfoncement.

8. Système selon la revendication 3, **caractérisé en ce qu'**un bourrelet (14) est aménagé sur les deux surfaces inclinées (11, 12) à proximité de la première section (6).

9. Système selon la revendication 8, **caractérisé en ce que** le bourrelet (14) est configuré sous la forme d'un élément de plaque, de manière à créer un trou, défini par l'élément de plaque, les surfaces inclinées et la transition entre la première section et la seconde section.

10. Système selon les revendications 1 à 9, **caractérisé en ce que** le renfoncement (10) est configuré selon une géométrie correspondant à la géométrie des crochets (2) vus dans un plan horizontal en coupe transversale.

11. Système selon les revendications 1 à 10, **caractérisé en ce qu'**un convoyeur à courroie (16, 17) est prévu sur chaque côté de la seconde section.

12. Système selon les revendications 1 à 11, **caractérisé en ce qu'**une plaque ronde/plateau rond est aménagé(e) sous la seconde section, avec les faces réceptrices sur chaque côté de la section.

13. Système selon la revendication 12, **caractérisé en ce qu'**un bord/face de guidage circulaire est aménagé(e) à proximité du centre de la plaque ronde.

14. Système selon les revendications 12 à 13, **caractérisé en ce qu'**un bord/face de guidage circulaire interrompu(e) par une ouverture au-dessus d'un segment d'un arc est aménagé(e) à proximité du bord externe de la plaque ronde.

15. Système selon la revendication 14, **caractérisé en ce qu'**un dispositif de convoyage est aménagé au niveau de l'ouverture pour recevoir les pièces de viande provenant de la plaque ronde.

16. Système selon les revendications 12 à 15, **caractérisé en ce que** la rotation de la plaque ronde peut être commandée.

17. Système selon les revendications 1 à 16, **caractérisé en ce que** la tringle suspendue verticalement, dans la position dans laquelle elle est placée au-dessus des renfoncements, est suspendue à un dispositif de fixation dans une colonne pouvant se déplacer dans le sens de la hauteur.

18. Système selon la revendication 17, **caractérisé en ce que** le déplacement dans le sens de la hauteur est effectué par paliers au moyen d'un moteur pas à pas.

19. Système selon les revendications 17 ou 18, **caractérisé en ce que** la suspension dans la colonne pouvant se déplacer dans le sens de la hauteur est connectée à ou comprend une cabine de balances.

20. Système selon les revendications 1 à 19, **caractérisé en ce que** le mouvement horizontal de la tringle est imprimé par un mécanisme pousseur à déplacement horizontal.

21. Système selon la revendication 20, **caractérisé en ce que** le mécanisme pousseur à déplacement horizontal est formé d'au moins deux supports disposés sur un montant vertical qui peut être déplacé horizontalement.

22. Système selon la revendication 21, **caractérisé en ce que** le montant porte deux tubes coulissants s'étendant perpendiculairement au montant et avec lesquels les supports sont connectés en pivotement.

23. Système selon les revendications 21 ou 22, **caractérisé en ce que** le montant est suspendu par son extrémité supérieure à un tube coulissant s'étendant horizontalement.

24. Procédé permettant de décrocher des pièces de viande qui sont fixées à des crochets sur plusieurs niveaux sur un dispositif de transport, comprenant les étapes suivantes :
a. séparer les pièces de viande fixées aux crochets au niveau le plus bas du dispositif de transport en deux groupes au cours d'un mouvement horizontal du dispositif de transport au-dessus d'une surface ayant des côtés inclinés,
b. déplacer le dispositif de transport verticalement à travers un renfoncement dans ladite surface conçue pour recevoir les crochets afin de libérer les pièces de viande des crochets au niveau le plus bas et former deux groupes de pièces de viande,
c. enlever les pièces de viande libérées,
d. déplacer encore le dispositif de transport verticalement pour libérer les pièces de viande au niveau sus-jacent des crochets et enlever les pièces de viande libérées,
e. répéter l'étape d jusqu'à ce que les pièces de viande situées à tous les niveaux soient libérées des crochets et enlevées.

25. Procédé selon la revendication 24, **caractérisé en ce que** l'on descend les pièces de viande libérées sur une plaque ronde qui a un bord muni d'une ouverture à travers laquelle les pièces libérées sont transférées jusqu'à un dispositif de convoyage.

26. Procédé selon les revendications 24 ou 25, **caractérisé en ce que** l'on déplace le dispositif de transport verticalement et par paliers, et à chaque fois que l'on enlève des pièces de viande, on pèse le dispositif de transport portant les pièces de viande restantes.

27. Procédé selon la revendication 26, **caractérisé en ce que** l'on retire le dispositif de transport muni de crochets de la cavité dans la surface lorsque la pesée effectuée indique un poids correspondant à celui du dispositif de transport sans les pièces de viande.
